(19) Europäisches Patentamt
European Patent Office
Office européen des brevets

(11) Veröffentlichungsnummer: **0 218 175 B1**

(12) # EUROPÄISCHE PATENTSCHRIFT

(45) Veröffentlichungstag der Patentschrift: **23.10.91**

(51) Int. Cl.$^5$: **C08K 5/09**, C08K 5/17, B29C 33/60, C08G 18/66

(21) Anmeldenummer: **86113415.3**

(22) Anmeldetag: **30.09.86**

(54) **Verfahren zur Herstellung von zelligen oder kompakten Polyurethan-Polyharnstoff-Förmkörpern mit verbesserten Entformungseigenschaften sowie innere Formtrennmittel und deren Verwendung für das Polyisocyanat-Polyadditionsverfahren.**

(30) Priorität: **05.10.85 DE 3535711**

(43) Veröffentlichungstag der Anmeldung:
**15.04.87 Patentblatt 87/16**

(45) Bekanntmachung des Hinweises auf die Patenterteilung:
**23.10.91 Patentblatt 91/43**

(84) Benannte Vertragsstaaten:
**AT BE CH DE FR GB IT LI NL**

(56) Entgegenhaltungen:
**WO-A-86/01215**
**DE-A- 2 431 968**
**US-A- 4 519 965**

(73) Patentinhaber: **BASF Aktiengesellschaft**
**Carl-Bosch-Strasse 38**
**W-6700 Ludwigshafen(DE)**

(72) Erfinder: **Horn, Peter, Dr.**
**Neue Stuecker 15**
**W-6900 Heidelberg(DE)**
Erfinder: **Schmidt, Hans Ulrich**
**Wredestrasse 53**
**W-6700 Ludwigshafen(DE)**
Erfinder: **Marx, Matthias, Dr.**
**Feuerhausstrasse 11a**
**W-8080 Fuerstenfeldbruck(DE)**

**EP 0 218 175 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Herstellung von zellhaltigen oder kompakten, elastischen Formkörpern mit einer geschlossenen Oberflächenschicht aus Polyurethan-Polyharnstoff-Elastomeren nach der bekannten Reaktionsspritzgußtechnik in geschlossenen Formwerkzeugen ist Gegenstand zahlreicher Literatur- und Patentpublikationen. Beispielhaft verweisen möchten wir auf die DE-OS 26 22 951 (US 4 218 543), in der Polyurethansysteme, die im wesentlichen aus organischen Polyisocyanaten, Polyolen, reaktiven aromatischen Di- bzw. Polyaminen, die in ortho-Stellung zu den Aminogruppen durch Alkylgruppen subsituiert sind und starken Katalysatoren für die Reaktion zwischen Hydroxyl- und Isocyanatgruppen bestehen, beschrieben werden. Obgleich die äußerst schnelle Reaktion zwischen den genannten Aufbaukomponenten angeblich die Anwendung von Trennmitteln für die Entformung der Formteile aus polierten Metallwerkzeugen überflüssig macht, wird auf die zusätzliche Verwendung von bekannten Trennmitteln auf Wachs- oder Silikonbasis sowie von inneren Trennmitteln, wie sie aus der DE-AS 19 53 637 (US 3 726 952) und der DE-AS 21 21 670 (GB 1 365 215) bekannt sind, hingewiesen.

Als derartige Trennmittel werden in der DE-AS 19 53 637 mindestens 25 aliphatische Kohlenstoffatome aufweisende Salze von aliphatischen Mono-oder Polycarbonsäuren und primären Mono-, Di- oder Polyaminen mit zwei oder mehr Kohlenstoffatomen oder Amid- oder Estergruppen aufweisenden Aminen, die mindestens eine primäre, sekundäre oder tertiäre Aminogruppe besitzen, genannt. Nach Angaben der DE-AS 21 21 670 wird hingegen eine Mischung aus mindestens zwei Verbindungen aus der Gruppe der Amin-Carbon säure-Salze gemäß DE-AS 19 53 637, der gesättigten und ungesättigten COOH- und/oder OH-Gruppen aufweisenden Ester von Mono- und/oder Polycarbonsäuren und mehrwertigen Alkoholen oder der natürlichen und/oder synthetischen Öle, Fette oder Wachse als Trennmittel verwendet. Aber selbst die Mitverwendung dieser Formtrennmittel führt bei den primäre aromatische Diamine enthaltenden Formulierungen zur Herstellung von Polyurethan-Polyharnstoff-Formkörpern nach der Reaktionsspritzgußtechnik im allgemeinen bestenfalls zu einer geringfügigen Verbesserung der selbsttrennenden Eigenschaften. Bei Verwendung von saure Gruppen, insbesondere Carboxylgruppen, aufweisenden Trennmitteln, ist außerdem nachteilig, daß die Katalyse der hochreaktiven Formulierungen gestört wird und dadurch Formteile ohne Anfangsfestigkeit gebildet werden.

Zur Vermeidung dieses Nachteils werden nach Angaben der EP-OS 81 701 (AU 82/90150) anstelle von hochmolekularen Polyhydroxylverbindungen Polyether verwendet, deren gegenüber Polyisocyanaten reaktive Gruppen zumindest zu 50 % aus primären und/oder sekundären Aminogruppen bestehen. Auf diese Weise kann man auf die Anwendung externer Trennmittel verzichten. Durch den Einsatz von kostspieligen Polyether-polyaminen werden jedoch nicht nur die erhaltenen Formkörper teurer, sondern auch deren Verwendbarkeit aufgrund der veränderten mechanischen Eigenschaften auf spezielle Anwendungsgebiete beschränkt.

Eine Verbesserung der selbsttrennenden Eigenschaften bei der Herstellung von Polyurethan-Polyharnstoff-Formkörpern nach der RIM-Technik konnte durch die Verwendung von Carbonsäureestern und/oder Carbonsäureamiden, hergestellt durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400, als innere Formtrennmittel nach Angaben der EP-A-153 639 erzielt werden.

Nach Angaben der EP-A-173 888 (US 4 519 965) finden als innere Formtrennmittel bei der Reaktionsspritzgußtechnik Mischungen Verwendung aus einem Zinkcarboxylat mit 8 bis 24 Kohlenstoffatomen im Carboxylrest und Stickstoff enthaltenden, mit Isocyanatgruppen reagierenden Polymeren zur Verbesserung der Verträglichkeit des Zinkcarboxylats mit den Aufbaukomponenten zur Polyurethan-Polyharnstoff-herstellung.

Mit Hilfe der beschriebenen Methoden konnten die Entformungseigenschaften der Polyurethan-Polyharnstoff-Formkörper in Abhängigkeit von der Zusammensetzung des Systems zwar teilweise verbessert werden, ohne das Problem jedoch endgültig und zufriedenstellend zu lösen.

Die Aufgabe der vorliegenden Erfindung bestand darin, innere Trennmittel zu entwickeln, die die obengenannten Nachteile nicht aufweisen, im Hinblick auf die eingesetzten höhermolekularen Verbindungen vielfältig verwendbar sind und zu einer wesentlichen Verbesserung der selbsttrennenden Eigenschaften bei der Formkörperherstellung führen.

Diese Aufgabe konnte überraschenderweise gelöst werden durch den Einsatz eines inneren Trennmittels zur Herstellung von Formkörpern nach dem Polyisocyanat-polyadditionsverfahren, das besteht aus

A) einer Mischung aus

i) 5 bis 80 Gew.-Teilen, vorzugsweise 30 bis 70 Gew.-Teilen mindestens eines organischen Amins (A, i), ausgewählt aus der Gruppe der primären aliphatischen und/oder cycloaliphatischen Monoamine mit

3 bis 20 Kohlenstoffatomen,

der linearen, verzweigten, cyclischen und/oder heterocyclischen Alkanolamine mit 2 bis 12 Kohlenstoffatomen,

der aliphatischen oder cycloaliphatischen primären Diamine mit 2 bis 20 Kohlenstoffatomen,

der aliphatischen oder cycloaliphatischen primären Mono- und/oder Polyamine, die zusätzlich sekundäre und/oder tertiäre Aminogruppen und/oder heterocyclische Reste und/oder Hydroxylgruppen und/oder Ethergruppen gebunden enthalten und

der Polyoxyalkylen-polyamine mit Molekulargewichten von 204 bis 5000, und/oder eines cyclischen Lactams,

ii) 20 bis 95 Gew.-Teilen, vorzugsweise 40 bis 70 Gew.-Teilen mindestens eines Metallsalzes der Stearinsäure und/oder Isostearinsäure und

iii) 0 bis 5 Gew.-Teilen, vorzugsweise 0,01 bis 1 Gew.-Teilen eines Metallsalzes einer organischen Mono- und/oder Dicarbonsäure und

B) 0,1 bis 200 Gew.-%, vorzugsweise 1,2 bis 20 Gern.-%, und insbesondere 2 bis 12 Gew.-%, bezogen auf das Gesamtgewicht der Mischung (A) mindestens einer organischen Mono- und/oder Dicarbonsäure oder den Anhydriden derartiger Carbonsäuren.

Gegenstand der Erfindung ist jedoch insbesondere ein Verfahren zur Herstellung von zellhaltigen oder kompakten Polyurethan-Polyharnstoff-Formkörpern mit verbesserten Entformungseigenschaften durch Umsetzung von

a) organischen Polyisocyanaten,

b) höhermolekularen Verbindungen mit einem Molekulargewicht von 1000 bis 8000 und mindestens zwei reaktiven Wasserstoffatomen,

c) aromatischen primären Diaminen und gegebenenfalls

d) weiteren Kettenverlängerungsmitteln und/oder Vernetzern in Gegenwart von

e) inneren Formtrennmitteln,

f) Katalysatoren und gegebenenfalls

g) Treibmitteln,

h) Hilfsmitteln und/oder Zusatzstoffen

als one shot-System nach der Reaktionsspritzgußtechnik in einem geschlossenen Formwerkzeug , das dadurch gekennzeichnet ist, daß man als inneres Formmittel

A) 0,1 bis 10 Gew.-%, vorzugsweise 1 bis 8 Gew.-%, bezogen auf das Gesamtgewicht der Aufbaukomponenten (b) bis (d) einer Mischung aus

i) 5 bis 80 Gew.-Teilen, vorzugsweise 30 bis 70 Gew.-Teilen mindestens eines organischen Amins (A, i) ausgewählt aus der Gruppe der primären aliphatischen und/oder cycloaliphatischen Monoamine mit 3 bis 20 Kohlenstoffatomen,

der linearen, verzweigten, cyclischen und/oder heterocyclischen Alkanolamine mit 2 bis 12 Kohlenstoffatomen,

der aliphatischen oder cycloaliphatischen primären Diamine mit 2 bis 20 Kohlenstoffatomen,

der aliphatischen oder cycloaliphatischen primären Mono- und/oder Polyamine, die zusätzlich sekundäre und/oder tertiäre Aminogruppen und/oder heterocyclische Reste und/oder Hydroxylgruppen und/oder Ethergruppen gebunden enthalten, und

der Polyoxyalkylen-polyamine mit Molekulargewichten von 204 bis 5000, und/oder eines cyclischen Lactams,

ii) 20 bis 95 Gew.-Teilen, vorzugsweise 40 bis 70 Gew.-Teilen mindestens eines Metallsalzes der Stearinsäure und/oder Isostearinsäure und

iii) O bis 5 Gew.-Teilen, vorzugsweise O,O1 bis 1 Gew.-Teilen eines Metallsalzes einer organischen Mono- und/oder Dicarbonsäure und

B) O,O1 bis 2 Gew.-%, vorzugsweise O,1 bis 1,5 Gew.-%, bezogen auf das Gesamtgewicht der Komponenten (b) bis (d), mindestens einer organischen Mono- und/oder Dicarbonsäure oder deren Anhydride verwendet.

Die inneren Formtrennmittel finden Verwendung zur Herstellung von Formkörpern nach dem Polyisocyanat-polyadditionsverfahren in offenen oder vorzugsweise geschlossenen, zweckmäßigerweise metallischen, temperierbaren Formwerkzeugen nach der Spritzgußtechnik.

Da weder die bekannten Trennmittel noch die bisher bekannten Kombinationen daraus die gewünschte ausreichende Trennwirkung ergaben, konnte nicht erwartet werden, daß die erfindungsgemäßen inneren Formtrennmittel, die bei Raumtemperatur oder unter den Verarbeitungstemperaturen in Form von Lösungen, Suspensionen oder Dispersionen vorliegen und daher gut handbar sind, trotz ihres Gehalts an mindestens einer organischen Mono-und/oder Dicarbonsäure oder deren Anhydride, diese vorzügliche

Trennwirkung bei der Formkörperherstellung auf Basis der Polyisocyanat-polyadditionsreaktion zeigen. Erwähnenswert ist ferner, daß die Lackierbarkeit der erhaltenen Formkörper durch den Zusatz der erfindungsgemäß verwendbaren inneren Trennmittel nicht erschwert oder gar unmöglich gemacht wird.

Zu den für das erfindungsgemäße Verfahren verwendbaren Aufbaukomponenten (a) bis (c), (e) und (f) sowie gegebenenfalls (d), (g) und (h) und den Ausgangsstoffen zur Herstellung der inneren Formtrennmittel ist folgendes auszuführen:

Als organische Polyisocyanate (a) kommen aliphatische, cycloaliphatische, araliphatische und vorzugsweise aromatische mehrwertige Isocyanate in Frage. Im einzelnen seien beispielshaft genannt: Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6; cycloaliphatische Diisocyanate, wie Cyclohexan-1,3- und 1,4-diisocyanat sowie beliebige Gemische dieser Isomeren, 1-Isocyanato-3,3,5-trimethyl-5-isocyanatomethyl-cyclohexan (Isophoron-diisocyanat), 2,4-und 2,6-Hexahydrotoluylen-diisocyanat sowie die entsprechenden Isomerengemische, 4,4′-, 2,2′- und 2,4′-Dicyclohexylmethan-diisocyanat sowie die entsprechenden Isomerengemische und vorzugsweise aromatische Di- und Polyisocyanate, wie 4,4′-, 2,4′- und 2,2′-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patens 761 626 und der NL-OS 71 02 524 beschrieben werden, Isocyanuratgruppen aufweisende Polyisocyanate, wie sie z.B. in den DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 12 31 688 genannt werden.

Vorzugsweise kommen jedoch zur Anwendung: urethangruppenhaltige Polyisocyanate, beispielsweise mit niedermolekularen linearen oder verzweigten Alkandiolen, Dialkylenglykolen oder Polyoxyalkylenglykolen mit Molekulargewichten bis 3000 auf Basis von Ethylenoxid, 1,2-Propylenoxid oder deren Gemischen modifiziertes 4,4′- und/oder 2,4′-Diphenylmethan-diisocyanat oder 2,4- und/oder 2,6-Toluylen-diisocyanat, Carbodiimidgruppen und/oder Isocyanuratringe enthaltende Polyisocyanate, z.B. auf 4,4′-, 2,4′-Diphenylmethan-diisocyanat, 2,4- und/oder 2,6-Toluylen-diisocyanat-Basis und insbesondere 4,4′-Diphenylmethan-diisocyanat, Mischungen aus 2,4′-und 4,4′-Diphenylmethan-diisocyanat, Toluylen-diisocyanate, Mischungen aus Diphenylmethan-diisocyanaten und Polyphenyl-polymethylen-polyisocyanaten (Roh-MDI) und Gemische aus Toluylen-diisocyanaten und Roh-MDI.

Als höhermolekulare Verbindungen (b) mit mindestens zwei reaktiven Wasserstoffatomen werden zweckmäßigerweise solche mit einer Funktionalität von 2 bis 8, vorzugsweise 2 bis 4 und einem Molekulargewicht von 1000 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentadiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\epsilon$ -Caprolacton, oder Hydroxycarbonsäuren, z.B.$\omega$-Hydroxycapronsäure.

Die Polyester-polyole besitzen vorzugsweise eine Funktionalität von 2 bis 3 und ein Molekulargewicht von 1.000 bis 3.000 und vorzugsweise 1.800 bis 2.500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N-und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak, Hydrazin und Hydrazide. Vorzugsweise verwendet werden mehrwertige, insbesondere zwei-und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.

Die Polyether-polyole besitzen vorzugsweise eine Funktionalität von 2 bis 4 und Molekulargewichte von 1.000 bis 8.000, vorzugsweise 1.200 bis 6.000 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

Als aromatische Diamine (c) werden beim erfindungsgemäßen Verfahren solche verwendet, deren primäre Aminogruppen gegenüber Polyisocyanaten durch mindestens einen orthoständigen Alkylsubstituenten zu jeder Aminogruppe sterisch behindert sind.

In Betracht kommen jedoch auch Mischungen aus

99,9 bis 50 Gew.%, vorzugsweise 78 bis 65 Gew.% mindestens eines der obengenannten, primären

aromatischen Diamine (c), dessen Aminogruppen gegenüber Polyisocyanaten durch mindestens einen orthoständigen Alkylsubstituenten zu jeder Aminogruppe sterisch behindert sind und
O,1 bis 5O Gew.%, vorzugsweise 22 bis 35 Gew.% mindestens eines unsubstituierten oder substituierten primären aromatischen Diamins (ci), dessen Aminogruppen gegenüber Polyisocyanaten keine durch elektronenanziehende Substituenten und/oder sterische Hinderung verursachte verminderte Reaktivität zeigen, wobei die Gew.% bezogen sind auf das Gesamtgewicht der Mischung aus (c) und (ci).

Insbesondere geeignet sind primäre aromatische Diamine, die bei Raumtemperatur flüssig und mit der Komponente (b) unter den Verarbeitungsbedingungen ganz oder zumindest teilweise mischbar sind.

Als primäre aromatische Diamine (c) bewährt haben sich und daher vorzugsweise verwendet werden alkylsubstituierte meta-Phenylendiamine der Formeln

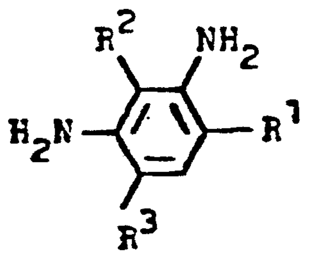
und/oder
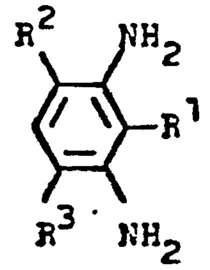

in denen $R^1$ ein Wasserstoffatom oder ein linearer oder verzweigter Alkylrest mit 1 bis 12 Kohlenstoffatomen, vorzugsweise 1 bis 6 Kohlenstoffatomen ist und $R^2$ und $R^3$ gleiche oder verschiedene, lineare oder verzweigte Alkylreste mit 1 bis 4 Kohlenstoffatomen, wie z.B. ein Methyl-, Ethyl-, Propyl-, Isopropyl, Butyl- oder sek. Butylrest sind.

Geeignet sind insbesondere solche Alkylreste $R^1$, bei denen die Verzweigungsstelle am $C_1$-Kohlenstoffatom sitzt. Neben Wasserstoff seien als Alkylreste $R^1$ beispielhaft genannt: der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl-und 1,1-Dimethyl-n-propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-,2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.

Bewährt haben sich ferner alkylsubstituierte Diamino-diphenylmethane, wie z.B. 3,3′-di- und 3,3′,5,5′-tetra-n-alkylsubstituierte 4,4′-Diamino-diphenylmethane wie z.B. 3,3′-Diethyl-, 3,3′,5,5′-Tetraethyl- und 3,3′,5,5′-Tetra-n-propyl-4,4′-diamino-diphenylmethan.

Anwendung finden vorteilhafterweise Diamino-diphenylmethane der Formel

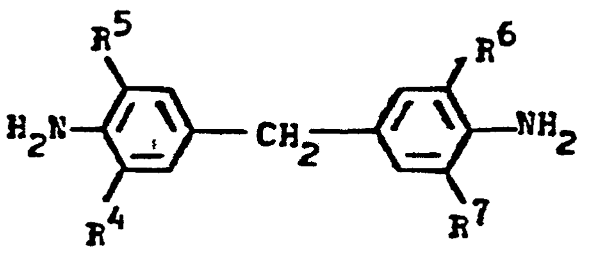
,

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die alkylsubstituierten 4,4′-Diamino-diphenylmethane können auch im Gemisch mit Isomeren der Formeln

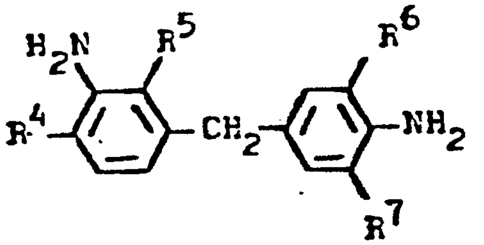

und/oder

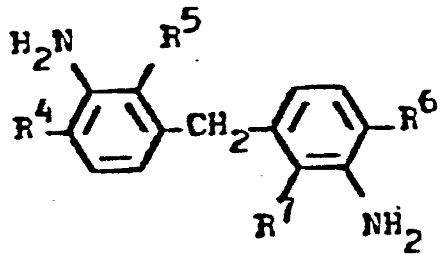

verwendet werden, wobei $R^4$, $R^5$, $R^6$ und $R^7$ die obengenannte Bedeutung haben.

Beispielshaft genannt seien: 3,3′,5-Trimethyl-5′-isopropyl-, 3,3′,5-Triethyl-5′-isopropyl-, 3,3′,5-Trimethyl-5′-sek.-butyl-, 3,3′,5-Triethyl-5′-sek.-butyl-4,4′-diamino-diphenylmethan, 3,3′-Dimethyl-5,5′-diisopropyl-, 3,3′-Diethyl-5,5′-di-sek.-butyl-, 3,3′-Diethyl-5,5′-di-sek.-butyl-, 3,5-Dimethyl-3′,5′-diisopropyl-, 3,5-Diethyl-3′,5′-diisopropyl-, 3,5-Dimethyl-3′,5′-di-sek.-butyl-, 3,5-Diethyl-3′,5′-di-sek.-butyl-4,4′-diamino-diphenylmethan, 3-Methyl-3′,5,5′-triisopropyl-, 3-Ethyl-3′,5,5′-triisopropyl-, 3-Methyl-3′,5,5′-tri-sek.-butyl-, 3-Ethyl-3′,5,5′-tri-sek.-butyl-4,4′-diamino-diphenylmethan, 3,3′-Diisopropyl-5,5′-di-sek.-butyl-, 3,5-Diisopropyl-3′,5′-di-sek.-butyl-, 3-Ethyl-5-sek.-butyl-3′,5′-diisopropyl-, 3-Methyl-5-tert.-butyl-3′,5′-diisopropyl-, 3-Ethyl-5-sek.-butyl-3′-methyl-5′-tert.-butyl-, 3,3′,5,5′-Tetraisopropyl- und 3,3′,5,5′-Tetra-sek.-butyl-4,4′-diamino-diphenylmethan.

Vorzugsweise verwendet werden folgende primären aromatischen Diamine: 2,4-Diethyl-, 2,4-Dimethyl-phenylendiamin-1,3, 2,4-Diethyl-6-methyl-,2-Methyl-4,6-diethyl-phenylendiamin-1,3, 2,4,6-Triethyl-phenylendiamin-1,3, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3′, 5′-diisopropyl- und 3,3′,5,5′-Tetraisopropyl-4,4′-diamino-diphenylmethan.

Die primären aromatischen Diamine können einzeln oder in Form von Mischungen, beispielsweise aus alkylsubstituierten 1,3-Phenylendiaminen, 3,3′-di- und/oder 3,3′,5,5′-tetraalkylsubstituierten 4,4′-Diamino-diphenylmethanen eingesetzt werden. Außerdem können die primären aromatischen Diamine mit maximal 50 Gew.%, bezogen auf das Gesamtgewicht, primären alkylsubstituierten aromatischen Tri- bis Pentaminen, wie z.B. Polyphenyl-polymethylen-polyaminen gemischt sein, wobei die aromatischen Polyamine mindestens in einer o-Stellung zu den Aminogruppen mit einem Alkylrest substituiert sind.

Als Diaminkomponente (ci) werden vorzugsweise unsubstituierte primäre aromatische Diamine verwendet. Geeignet sind jedoch auch substituierte primäre aromatische Diamine, zweckmäßigerweise monoalkylsubstituierte aromatische Diamine, bei denen die Reaktivität der Aminogruppen durch den Substituenten nicht negativ beeinflußt wird. Im einzelnen seien beispielhaft genannt: 1,2-, 1,3- und 1,4-Phenylendiamin, Benzidin, 4,4′- und 2,4′-Diaminodiphenylmethan, 4,4′-Diamino-diphenylether, 1,5-Diamino-naphthalin, 1,8-Diamino-naphthalin, 3,4-, 2,4- und 2,6-Toluylen-diamin. Die aromatischen Diamine (ci) können ebenso wie die aromatischen Diamine (c) einzeln oder in Form von Mischungen eingesetzt werden. Vorzugsweise Anwendung finden 2,4- und/oder 2,6-Toluylendiamin und insbesondere 1,3-Phenylen-diamin.

Als aromatische Diamine werden vorzugsweise Mischungen verwendet aus (c) 80 bis 50 Gew.% 2,4-Dimethyl-6-tert.-butyl-phenylendiamin-1,3, 2,4-Diethyl-6-methyl und/oder 2-Methyl-4,6-diethyl-phenylendiamin-1,3 und (ci) 20 bis 50 Gew.% 1,3-Phenylendiamin, wobei die Gew.% bezogen sind auf das Gesamtgewicht der Mischung aus den Komponenten (c) und (ci).

Die aromatischen Diamine (c) oder die Mischung aus den aromatischen Diaminen (c) und (ci) kommen beim erfindungsgemäßen Verfahren in Mengen von 5 bis 50 Gew.-Teilen, vorzugsweise 10 bis 40 Gew.-Teilen und insbesondere 15 bis 30 Gew.-Teilen, bezogen auf 100 Gew.-Teile der Komponente (b), zur Anwendung.

Gegebenenfalls kann es zweckmäßig sein, insbesondere bei der Herstellung von zellhaltigen Polyurethan-Polyharnstoff-Formkörpern, die Mischung aus primären aromatischen Diaminen (c) teilweise durch Kettenverlängerungsmittel und/oder Vernetzer (d) zu ersetzen. Die Kettenverlängerungsmittel oder Vernetzer besitzen vorteilhafterweise Molekulargewichte kleiner als 500, vorzugsweise von 30 bis 400 und weisen vorzugsweise zwei aktive Wasserstoffatome auf. In Betracht kommen beispielsweise aliphatische und/oder araliphatische Diole mit 2 bis 14, vorzugsweise 2 bis 6 Kohlenstoffatomen, wie Propandiol-1,3, Decandiol-1,10, Diethylenglykol, Dipropylenglykol, Bis-(2-hydroxyethyl)-hydrochinon und vorzugsweise Ethylenglykol, Butandiol-1,4 und Hexandiol-1,6, Triole, wie Glycerin und Trimethylolpropan, niedermolekulare Polyoxyalkylen-polyole auf Basis Ethylen- und/oder 1,2-Propylenoxid und den vorgenannten Startermolekülen und sek. aromatische Diamine, von denen beispielshaft genannt seien: N,N′-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N′-Diethyl-, N,N′-Di-sek.-pentyl-,

N,N'-Di-sek.-hexyl-, N,N'-Di-sek.-decyl-, N,N'-Dicyclohexyl-p- bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diamino-diphenylmethan und N,N'-Di-sek.-butyl-benzidin.

Die Kettenverlängerungsmittel und/oder Vernetzer (d) können einzeln oder in Form von Mischungen eingesetzt werden. Sofern Mischungen aus aromatischen Diamine (c) und Kettenverlängerungsmittel und/oder Vernetzern (d) Anwendung finden, enthalten diese vorteilhafterweise pro 100 Gew.Teile aromatische Diamine (c) 1 bis 40, vorzugsweise 5 bis 20 Gew.Teile der Komponenten (d).

Wie bereits dargelegt wurde, bestehen die erfindungsgemäßen inneren Formtrennmittel (e) aus

A) einer Mischung aus

i) mindestens einem organischen Amin und/oder cyclischen Lactam,

ii) mindestens einem Metallsalz der Stearinsäure, der Isostearinsäure oder einer Mischung aus Stearin- und Isostearinsäure

iii) gegebenenfalls einem Metallsalz einer organischen Mono- und/oder Dicarbonsäure und

(B) mindestens einer organischen Mono- und/oder Dicarbonsäure, wobei anstelle der freien Carbonsäure auch deren Anhydride verwendet werden können.

Als organische Amine (Ai) eignen sich Mono- und/oder Polyamine ausgewählt aus der Gruppe der primären aliphatischen und/oder cycloaliphatischen Monoamine mit 3 bis 20 Kohlenstoffatomen, vorzugsweise 4 bis 13 Kohlenstoffatomen, wie z.B. Isopropyl-, n-Butyl-, iso-Butyl-, sek. Butyl-, n- und iso-Amyl-, 1,2-Dimethylpropyl-, n- und iso-Hexyl-, 2-Ethyl-hexyl-, Octyl-, 6-Methyl-heptyl-2-, 2-Ethyl-octyl-, Decyl-, Tridecyl-, Dodecyl-, Hexadecyl-, Octadecyl-, Stearyl- und Cyclohexylamin, der linearen, verzweigten, cyclischen und/oder heterocyclischen Alkanolamine mit 2 bis 12 Kohlenstoffatomen, vorzugsweise 2 bis 10 Kohlenstoffatomen wie z.B. Ethanolamin, Propanolamin, Butanolamin, 3-Hydroxybutylamin, 2-Hydroxybutylamin, Pentanolamin, Hexanolamin, 4-Hydroxyhexylamin, Octanolamin und 1-(2-Hydroxyethyl)-piperazin, N-Methyl-, N-Butyl-, N-Neopentyl-, N-Cyclohexylethanolamin, N-Methyl-isopropanolamin, Diethanolamin, Dipropanolamin, N-Alkyl-dialkanolamin mit 1 bis 6-Kohlenstoffatome im Alkylrest wie z.B. N-Methyl-, N-Butyl-, N-Cyclohexyl-diethanol-bzw. diisopropanolamin, 1,4-Di(2-hydroxyethyl)-piperazin, 1,4-Diisopropanol-piperazin, Triethanolamin und Triisopropanolamin, der aliphatischen oder cycloaliphatischen primären Diamine mit 2 bis 20 Kohlenstoffatomen, vorzugsweise 2 bis 12 Kohlenstoffatomen, wie z.B. Ethylen-, 1,2- bzw. 1,3-Propylen-, 1,4-Butylen-, 1,6-Hexamethylen-, Neopentyl-, 1,10-Decylen-, 1,12-Dodecylen-diamin und Diaminocyclohexane, der aliphatischen oder cycloaliphatischen primären Mono- und/oder Polyamine mit Molekulargewichten von 103 bis 2000, vorzugsweise von 117 bis 800, die zusätzlich sekundäre und/oder tertiäre Aminogruppen und/oder heterocyclische Reste und/oder Hydroxylgruppen und/oder Ethergruppen gebunden enthalten, wie z.B. Diethylen-triamin, Dipropylen-triamin, Dihexamethylen-triamin, 1-Diethylamino-4-pentyl-, 3-(2-Ethylhexoxy)-propyl-, 3-(2-Aminoethyl)aminopropylamin, N,N'-Bis(3-aminopropyl)ethylendiamin, Kondensationsprodukte aus Diethylentriamin, N-2-Aminoethyl-ethanolamin, 2-Aminoethoxyethanol-2, 4,9-Dioxadodecan-1,12-diamin, N,N'-Bis-(3-aminopropyl)-ethylendiamin, 1-(2-Aminoethyl-)piperazin, 1,4-Bis-(2-Aminoethyl-)piperazin, 1,4-Bis-(3-Aminopropyl-)piperazin, Tris-(aminoethyl-)amin und Tris-(3-aminopropyl-)amin und Polyoxyalkylen-polyamine mit primären und/oder sekundären Aminogruppen einer Funktionalität von 1 bis 6, vorzugsweise 2 bis 4 und Molekulargewichten von 204 bis 5000, vorzugsweise von 400 bis 2000 wie z.B. Polyoxypropylen-diamine, Polyoxyethylen-diamine, Polyoxypropylen-polyoxyethylen-diamine, Polyoxypropylen-triamine, Polyoxyethylen-triamine, Polyoxypropylen-polyoxyethylen-triamine und Polyoxypropylen-polyoxyethylen-tetramine. Geeignet sind auch Polyoxyalkylen-polyamine die bis zu 50 %, vorzugsweise bis zu 15 % endständige primäre und/oder sekundäre Hydroxylgruppen gebunden enthalten. Die organischen Amine (Ai) können einzeln oder als Mischungen aus Aminen der gleichen Gruppe oder aus Aminen von verschiedenen Gruppen eingesetzt werden.

Anstelle der organischen Amine (Ai) oder im Gemisch mit diesen können auch cyclische Lactame verwendet werden, wobei 5 bis 7 gliedrige cyclische Lactame wie z.B. Pyrrolidon und $\epsilon$-Caprolactam vorzugsweise Anwendung finden.

Als organische Amine (Ai) haben sich insbesondere bewährt und werden daher vorzugsweise eingesetzt: n-Butylamin, Tridecylamin, 6-Methyl-heptyl-2-amin, 1-(2-Aminoethyl)-piperazin, 1-(2-Hydroxyethyl)-piperazin, N-2-Aminoethyl-ethanolamin, Diethylentriamin, Polyalkylen-polyamine mit Molekulargewichten von 117 bis 800, beispielsweise Polyethylen-polyamine, Polyoxypropylen-triamine und 3,3'-Dimethyl-4,4'-diamino-dicyclohexylmethan.

Zur Herstellung der Metallsalze (Aii) eignen sich die handelsüblichen Stearin- und Isostearinsäure, die, ohne daß die Trennwirkung signifikant beeinträchtigt wird, bis zu 10 Gew.-%, vorzugsweise bis zu 5 Gew.-% andere, gegebenenfalls ungesättigte Carbonsäuren mit 8 bis 24 Kohlenstoffatomen, wie z.B. Palmitinsäure, Ölsäure, Ricinolsäure u.a. enthalten können.

Als Metalle für die Bildung der Metallsalze (Aii) und (Aiii) finden Alkalimetalle, vorzugsweise Natrium

und Kalium, Erdalkalimetalle, vorzugsweise Magnesium und Calcium und insbesondere Zink Verwendung. Vorzugsweise werden als Metallsalze der Stearin- und/oder Isostearinsäure Zinkstearat, Zinkisostearat, Calciumstearat und Natriumstearat oder Mischungen aus mindestens zwei der genannten Stearate eingesetzt. Insbesondere verwendet wird eine Mischung aus Zinkstearat und/oder Zinkisostearat, Calcium- und Natriumstearat.

Zusätzlich zu den Metallsalzen (Aii) der Stearin- und/oder Isostearinsäure können die erfindungsgemäßen inneren Formtrennmittel gegebenenfalls noch Metallsalze von organischen Mono- und/oder Dicarbonsäuren (Aiii) enthalten, wobei die Carbonsäuren zweckmäßigerweise einen pks-Wert von kleiner 1,1, vorzugsweise von 2 bis 6,8 aufweisen. Zweckmäßigerweise finden die Salze der obengeannten Metalle Verwendung, so daß als (Aiii) vorzugsweise Alkalimetallsalze, beispielsweise Natrium- und Kaliumsalze, Erdalkalimetallsalze, beispielsweise Calcium- und Magnesiumsalze und insbesondere Zinksalze eingesetzt werden.

Die erfindungsgemäßen inneren Trennmittel enthalten als wesentliche Aufbaukomponente Mono- und/oder Dicarbonsäuren oder deren Anhydride (B). Zweckmäßigerweise finden die zur Bildung der Metallsalze (Aiii) geeigneten Mono- und/oder Dicarbonsäuren Verwendung. In Betracht kommen aliphatische Monocarbonsäuren mit 1 bis 20 Kohlenstoffatomen, vorzugsweise 5 bis 18 Kohlenstoffatomen, aliphatische Dicarbonsäuren mit 2 bis 36 Kohlenstoffatomen, vorzugsweise 2 bis 12 Kohlenstoffatomen, aromatische Mono- und/oder Dicarbonsäuren mit 7 bis 12 Kohlenstoffatomen, vorzugsweise 7 bis 10 Kohlenstoffatomen, die gegebenenfalls olefinisch ungesättigte Einheiten und/oder mit Isocyanatgruppen reaktive Reste, wie z.B. Hydroxyl-, Amino- oder Alkylaminogruppen, gebunden enthalten können. Anstelle der Mono- und/oder Dicarbonsäuren oder im Gemisch mit diesen können auch die entsprechenden Carbonsäureanhydride eingesetzt werden. Beispielhaft genannt seien aliphatische Monocarbonsäuren wie z.B. Ameisensäure, Essigsäure, Propionsäure, Isovaleriansäure, Capronsäure, Caprinsäure, Laurinsäure, Myristinsäure, Palmitinsäure, Stearinsäure, Ricinolsäure, Arachinsäure, Hydroxystearinsäure, Isostearinsäure und Ölsäure, aliphatische Dicarbonsäuren wie z.B. Oxalsäure, Bernsteinsäure, Glutarsäure, Adipinsäure, Pimelinsäure, Korksäure, Sebacinsäure, Undecandisäure, Dodecandisäure, dimerisierte und trimerisierte Fettsäuren, Maleinsäure und Fumarsäure und aromatische Mono- und/oder Dicarbonsäuren wie z.B. Benzoesäure, die Toluylsäuren, Hydroxybenzoesäuren, Aminobenzoesäuren, Phthalsäure, Isophthalsäure und Terephthalsäure. Vorzugsweise Anwendung finden folgende Mono- und Dicarbonsäuren sowie Carbonsäureanhydride Oxalsäure, Stearinsäure, Adipinsäure, Benzoesäure, Benzoesäureanhydrid. Die Mono-, Dicarbonsäuren und deren Anhydride können einzeln oder in Form von Mischungen verwendet werden.

Zur Herstellung der erfindungsgemäßen inneren Trennmittel können die Aufbaukomponenten (Ai) bis (Aiii) und (B) gleichzeitig oder nacheinander, zweckmäßigerweise unter Rühren bei Temperaturen von 20 bis 130° C, vorzugsweise von 40 bis 100° C gemischt werden. Die erhaltenen Produkte sind eine begrenzte Zeit, beispielsweise bis zu 2 Monaten lagerstabil. Nach einer anderen Methode, die vorzugsweise Anwendung findet, werden die Aufbaukomponenten gleichzeitig oder nacheinander in die Ausgangstoffe zur Herstellung der Polyurethan-Polyharnstoff-Formkörper, vorzugsweise in die sogenannte Komponente (A), bei Temperaturen von 20 bis 90° C einverleibt.

Als Katalysatoren (f) werden insbesondere Verbindungen verwendet, die die Reaktion der Hydroxylgruppen enthaltenden Verbindungen der Komponenten (b) und gegebenenfalls (d) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N′,N′-Tetramethylethylendiamin, N,N,N′,N′-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Zu Treibmitteln (g), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.%, bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-2,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan-Polyharnstoff-Formkörpern hängt ab von der Dichte, die man erreichen will sowie gegebenenfalls von der Mitverwendung von Wasser. Im allgemeinen liefern Mengen von 0,5 bis 15 Gew.-Teilen, bezogen auf 100 Gew.-Teile der Komponente (b) zufriedenstellende Ergebnisse.

Der Reaktionsmischung können gegebenenfalls auch noch Hilfsmittel und/oder Zusatzstoffe (h) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren.

Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt und danach gegebenenfalls aminiert werden sowie Filler-polyoxyalkylen-polyole oder -polyamine, bei denen wäßrige Polymerdispersionen in Polyoxyalkylen-polyol- oder -polyamindispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 µm zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Geeignete Flammschutzmittel sind beispielsweise Trikresylphosphat, Tris-2--chlorethylphosphat, Trischlorpropylphosphat und Tris-2,3-dibrompropylphosphat.

Außer den bereits genannten halogensubstituierten Phosphaten können auch anorganische Flammschutzmittel, wie Alumniumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für

jeweils 100 Gew.-Teile der Komponente (b) zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Zur Herstellung der gegebenenfalls zelligen Polyurethan-Polyharnstoff-Formkörperwerden die organischen Polyisocyanate (a), höhermolekularen Verbindungen mit einem Molekulargewicht von 1000 bis 8000 und mindestens zwei reaktiven Wasserstoffatomen (b), aromatischen primären Diamine (c) und gegebenenfalls Kettenverlängerungsmittel und/oder Vernetzer (d) in solchen Mengen zur Umsetzung gebracht, daß das Äquivalenz-Verhältnis von NCO-Gruppen der Polyisocyanate (a) zur Summe der reaktiven Wasserstoffatome der Komponenten (b), (c) und gegebenenfalls (d) 1:0,85 bis 1,25, vorzugsweise 1:0,95 bis 1,15 beträgt.

Die Herstellung der zellhaltigen und vorzugsweise kompakten Polyurethen-Polyharnstoff-Formkörper erfolgt vorzugsweise nach dem one shot-Verfahren mit Hilfe der bekannten Reaktionsspritzguß-Technik. Diese Verfahrensweise wird beispielsweise beschrieben von Piechota und Röhr in "Integralschaumstoff", Carl-Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die primären aromatischen Diamine (c) und gegebenenfalls Kettenverlängerungsmittel und/oder Vernetzer (d) in den höhermolekularen Verbindungen mit mindestens zwei reaktiven Wasserstoffatomen (b) zu lösen und gegebenenfalls mit Treibmitteln, Hilfs- und Zusatzstoffen in der Komponente (I) zu vereinigen und als Komponente (II) die organischen Polyisocyanate, modifizierten Polyisocyanate und/oder NCO-Prepolymere zu verwenden. Vorteilhaft ist hierbei beispielsweise, daß die Komponenten (I) und (II) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen kompakten Formkörper eine Dichte von 1,0 bis 1,4 $g/cm^3$, vorzugsweise von 1,0 bis 1,2 $g/cm^3$ und die zellhaltigen Formkörper eine Dichte von 0,2 bis 1,2 $g/cm^3$, vorzugsweise von 0,8 bis 1,2 $g/cm^3$ und insbesondere 0,8 bis 1,0 $g/cm^3$ aufweisen. Die Ausgangskomponenten werden mit einer Temperatur von 15 bis 80 °C, vorzugsweise von 40 bis 55 °C in die Form eingebracht. Die Formwerkzeugtemperatur beträgt zweckmäßigerweise 20 bis 100 °C, vorzugsweise 30 bis 80 °C. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhalten kompakten bzw. mikrozellularen Polyurethan-Polyharnstoff-Formkörper eignen sich insbesondere zur Verwendung in der Automobilindustrie, beispielsweise als Stoßstangenabdeckungen, Rammschutzleisten und Karosserieteile, wie Regenrinnen, Kotflügel, Spoiler und Radkästenverbreiterungen sowie als technische Gehäuseteile, Laufrollen und Schuhsohlen. Die zellhaltigen Schaumstoffe finden beispielsweise als Armlehnen, Kopfstützen, Sicherheitsabdeckungen im Automobilinnenraum sowie als Motorrad- und Fahrradsättel und Deckschichten in Verbundschaumstoffen Anwendung.

Die erfindungsgemäßen inneren Trennmittel finden Verwendung zur Herstellung von kompakten oder zelligen Formkörpern nach dem Polyisocyanat-polyadditionsverfahren, vorzugsweise mit Hilfe der Reaktionsspritzguß-(RIM)-technik.

Die in den Beispielen genannten Teile beziehen sich auf das Gewicht.

Beispiel 1

Komponente I: Mischung aus

73,3 Gew.-Teilen eines Polyoxypropylen(80 Gew.%)-polyoxyethylen (20 Gew.%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-addukt,

21,0 Gew.-Teilen 1-Methyl-3,5-diethyl-2,4-diaminobenzol,

0,33 Gew.-Teilen 1,4-Diazabicyclo-(2,2,2)-octan,

0,3 Gew.-Teilen Dibutylzinndilaurat,

5,0 Gew.-Teilen eines Fettsäureesters, hergestellt durch Veresterung von 15,4 Mol Montansäure, 292,5 Mol Tallölfettsäure und 102,6 Mol Triisopropanolamin,

3,144 Gew.-Teilen einer Lösung aus

1,5 Gew.-Teilen n-Butylamin,
1,5 Gew.-Teilen Zinkstearat,
0,072 Gew.-Teilen Calciumstearat und
0,072 Gew.-Teilen Natriumstearat,
0,036 Gew.-Teilen Zinkoxalat und
0,21 Gew.-Teilen Benzoesäureanhydrid.

Komponente II:

45 Gew.-Teile einer Mischung aus mit Polyoxypropylen-glykol modifiziertem, Carbodiimidgruppen enthaltendem 4,4'-Diphenylmethan-diisocyanat mit einem NCO-Gehalt von 26,5 Gew.%.

Die Komponenten (I) und (II) wurden auf 50° C erwärmt und nach dem Reaktionsspritzguß-Verfahren auf einer Hochdruckdosieranlage vom Typ [R]Puromat 30 der Elastogran-Maschinenbau in einem auf 60 bis 70° C temperierten Aluminiumformwerkzeug mit der Raumform einer Automobiltürseitenverkleidung und einer Innendimension von ungefähr 2 x 1000 x 10 mm zu Formteilen verarbeitet.

Vor Beginn der Herstellung einer Formteilserie wurde das Formwerkzeug einmalig mit einem externen Trennwachs vom Typ Fluoricon 36/134/2 der Firma Acmos versiegelt. Die Schußzeit betrug ungefähr 1 Sekunde und die Formstandzeit 45 Sekunden.

Als Anzahl der möglichen Entformungen wurde die Zahl festgelegt, bis zu der der Formkörper beim offenen des Formwerkzeugs problemlos entnommen werden konnte, ohne daß durch zu große Adhäsionskräfte der Formkörper an der Formwerkzeugunterseite festgehalten oder/und verzogen wurde.

Die Versuchsserie wurde abgebrochen, nachdem 40 Formkörper problemlos ohne jegliche Verformung entformt wurden.

An dem erhaltenen Formkörper wurden folgende mechanische Eigenschaften gemessen:

| | |
|---|---|
| Dichte nach DIN 53 420 [$g/cm^3$]: | 1,1 |
| Shore D Härte nach DIN 53 505 : | 53 |
| Zugfestigkeit nach DIN 53 504 [$N/mm^2$]: | 25 |
| Dehnung nach DIN 53 504 [%] : | 330 |
| Weiterreißfestigkeit nach DIN 53 507 [N/mm]: | 29,5 |

Beispiel 2

Man verfuhr analog den Angaben von Beispiel 1, verwendete jedoch als Komponente I eine Mischung aus

73,3 Gew.-Teilen eines Polyoxypropylen(80 Gew.%)-polyoxyethylen (20 Gew.- %)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-addukt,
21,0 Gew.-Teilen 1,3-Dimethyl-5-tert.butyl-2,4-diaminobenzol,
0,33 Gew.-Teilen 1,4-Diazabicyclo-(2,2,2)-octan,
0,3 Gern.-Teilen Dibutylzinndilaurat,
5,0 Gew.-Teilen eines Fettsäureesters, hergestellt durch Veresterung von 15,4 Mol Montansäure, 292,5 Mol Tallölfettsäure und 102,6 Mol Triisopropanolamin,
3,144 Gew.-Teilen einer Lösung aus
1,5 Gew.-Teilen eines Amingemisches aus
57 Gew.-Teilen N-2-Aminoethylethanolamin und
43 Gew.-Teilen n-Butylamin,
1,5 Gew.-Teilen Zinkstearat,
0,072 Gew.-Teilen Calciumstearat und
0,072 Gew.-Teilen Natriumstearat,
0,036 Gew.-Teilen Zinkoxalat und
0,11 Gew.-Teilen Benzoesäure.

Die Versuchsserie wurde abgebrochen, nachdem 40 Formkörper ohne jegliche Verklebung oder Verformung entformt wurden.

An dem erhaltenen Formkörper wurden folgende mechanische Eigenschaften gemessen:

| | |
|---|---|
| Dichte nach DIN 53 420 [g/cm$^3$] : | 1,1 |
| Shore D Härte nach DIN 53 505 : | 52 |
| Zugfestigkeit nach DIN 53 504 [N/mm$^2$]: | 25.5 |
| Dehnung nach DIN 53 504 [%] : | 340 |
| Weiterreißfestigkeit nach DIN 53 507 [N/mm] : | 28,7 |

Beispiel 3

Man verfuhr analog den Angaben von Beispiel 2, verwendete jedoch anstelle des N-2-Aminoethylethanolamin-n-Butylamingemisches 1,5 Gew.-Teile eines Amingemisches, bestehend aus

28,2 Gew.-% 1-(2-Aminoethyl)-piperazin,
12,3 Gew.-% 1-(2-Hydroxyethyl)-piperazin,
54,8 Gew.-% N-2-Aminoethylethanolamin
3,6 Gew.-% Diethylentriamin und
1,1 Gew.-% N,N'-Bis(3-aminopropyl)ethylendiamin

Die Versuchsserie wurde abgebrochen, nachdem 40 Formkörper ohne jegliche Verklebung oder Verformung entformt wurden.

An dem erhaltenen Formkörper wurden folgende mechanische Eigenschaften gemessen:

| | |
|---|---|
| Dichte nach DIN 53 420 [g/cm$^3$]: | 1,1 |
| Shore D Härte nach DIN 53 505 : | 53 |
| Zugfestigkeit nach DIN 53 504 [N/mm$^2$]: | 26 |
| Dehnung nach DIN 53 504 [%] : | 330 |
| Weiterreißfestigkeit nach DIN 53 507 [N/mm]: | 29 |

Vergleichsbeispiel I

Man verfuhr analog den Angaben von Beispiel 1 verwendete jedoch anstelle der dort beschriebenen Komponente I eine Mischung aus
73,3 Gew.-Teilen eines Polyoxypropylen(80 Gew.-%)-polyoxyethylen (20 Gew.-%)-triols mit einer Hydroxylzahl von 26, hergestellt durch Polyaddition von 1,2-Propylenoxid an Trimethylolpropan und anschließender Polyaddition von Ethylenoxid an das erhaltene Trithylolpropan-polyopropylen-addukt,
21,0 Gew.-Teilen 1-Methyl-3,5-diethyl-2,4-diaminobenzol,
0,33 Gew.-Teilen 1,4-Diazabicyclo-(2.2.2.)-octan,
0,3 Gew.-Teilen Dibutylzinndilaurat und
5,0 Gew.-Teilen eines Fettsäureesters, hergestellt durch Veresterung von 15,4 Mol Montansäure, 292,5 Mol Tallölfettsäure und 102,6 Mol Triisopropanolamin.

Nach 10 Entformungen konnte das Formteil nicht mehr verzugsfrei entformt werden. Die Versuchsserie wurde daher abgebrochen. Das erhaltene Formteil besaß folgende mechanische Eigenschaften

| | |
|---|---|
| Dichte nach DIN 53 420 [g/cm$^3$] : | 1,1 |
| Shore D Härte nach DIN 53 505 : | 53 |
| Zugfestigkeit nach DIN 53 504 [N/mm$^2$] : | 25 |
| Dehnung nach DIN 53 504 [%] : | 330 |
| Weiterreißfestigkeit nach DIN 53 507 [N/mm] : | 29,5 |

Beispiel 4

Komponente I: Mischung aus

73,3 Gew.-Teilen eines Polyoxypropylen(80 Gew.-%)-polyoethylen (20 Gew.-%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-addukt,
21,0 Gew.-Teilen 1-Methyl-3,5-diethyl-2,4-diaminobenzol,
0,33 Gew.-Teilen 1,4-Diazabicyclo-(2,2,2,)-octan,
0,3 Gew.-Teilen Dibutylzinndilaurat,
5,0 Gew.-Teilen eines Fettsäureesters, hergestellt durch Veresterung von 15,4 Mol Montansäure, 292,5 Mol Tallölfettsäure und 102,6 Mol Triisopropanolamin,
3,12 Gew.-Teilen einer Lösung, bestehend aus 50 Gew.-Teilen eines Polyoxypropylen-triamins ($^R$Jeffamin T 403 der Firma Texaco) und 50 Gew.-Teilen Zinkstearat, hergestellt durch Erwärmen der Komponenten auf 80-100 °C und
0,43 Gew.-Teilen Benzoesäure

Komponente II: analog Beispiel 1

Die Herstellung des Formteils wurde analog den Angaben von Beispiel 1 durchgeführt. Nach 18 Entformungen trat ein leichter Verzug des Formteils beim Entformen auf.

An dem erhaltenen Formteil wurden folgende mechanische Eigenschaften gemessen:

| | |
|---|---|
| Dichte nach DIN 53 420 [g/cm$^3$]: | 1,07 |
| Shore D Härte nach DIN 53 505 : | 53 |
| Zugfestigkeit nach DIN 53 504 [N/mm$^2$]: | 25,8 |
| Dehnung nach DIN 53 504 [%] : | 285 |
| Weiterreißfestigkeit nach DIN 53 507 [N/mm]: | 27 |

Vergleichsbeispiel II

Man verfuhr analog den Angaben von Beispiel 4, jedoch ohne Zusatz der 0,43 Gew.-Teile Benzoesäure in der Komponente I.

Nach 12 Entformungen konnte das Formteil nicht mehr verzugsfrei entformt werden. Die Versuchsserie wurde daher abgebrochen. Das erhaltene Formteil besaß folgende mechanische Eigenschaften:

| | |
|---|---|
| Dichte nach DIN 53 420 [g/cm$^3$] : | 1,08 |
| Shore D Härte nach DIN 53 505 : | 52 |
| Zugfestigkeit nach DIN 53 504 [N/mm$^2$] : | 26,5 |
| Dehnung nach DIN 53 504 [%] : | 315 |
| Weiterreißfestigkeit nach DIN 53 507 [N/mm] : | 27 |

Beispiel 5

Komponente I: Mischung aus

73,3 Gew.-Teilen eines Polyoxypropylen(80 Gew.-%)-polyoxyethylen (20 Gew.-%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-addukt,
21,0 Gew.-Teilen 1-Methyl-3,5-diethyl-2,4-diaminobenzol,
0,33 Gew.-Teilen Diazabicyclo-(2,2,2)-octan,
0,3 Gew.-Teilen Dibutylzinndilaurat,
5,0 Gew.-Teilen eines Fettsäureesters, hergestellt durch Veresterung von 15,4 Mol Montansäure, 292,5 Mol Tallölfettsäure und 102,6 Mol Triisopropanolamin,
3,12 Gew.-Teilen einer Lösung, bestehend aus 50 Gew.-Teilen eines Polyoxypropylen-triamins ($^R$Jeffamin T 403 der Firma Texaco) und 50 Gew.-Teilen Zinkstearat, hergestellt durch Erwärmen der Komponenten auf 80-100 °C,
0,072 Gew.-Teilen Natriumstearat,
0,072 Gew.-Teilen Calciumstearat und
0,43 Gew.-Teilen Benzoesäure

Komponente II analog Beispiel 1

Die Herstellung des Formteils wurde analog den Angaben des Beispiels 1 durchgeführt.

Die Versuchsserie wurde abgebrochen, nachdem 40 Formkörper ohne jegliche Verklebung oder Verformung entformt werden konnten.

An dem erhaltenen Formteil wurden folgende mechanische Eigenschaften gemessen.

| | |
|---|---|
| Dichte nach DIN 53 420 [g/cm$^3$] : | 1,1 |
| Shore D Härte nach DIN 53 505 : | 54 |
| Zugfestigkeit nach DIN 53 504 [N/mm$^2$] : | 26,2 |
| Dehnung nach DIN 53 504 [%] : | 310 |
| Weiterreißfestigkeit nach DIN 53 507 [N/mm] : | 28 |

Beispiel 6

Komponente I: Mischung aus

73,3 Gew.-Teilen eines Polyoxypropylen(80 Gew.-%)-polyoethylen-(20 Gew.-%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyopropylen-addukt,
21,0 Gew.-Teilen 1-Methyl-3,5-diethyl-2,4-diaminobenzol,
0,33 Gew.-Teilen 1,4-Diazbicyclo-(2,2,2)-octan,
0,3 Gew.-Teilen Dibutylzinndilaurat,
5,0 Gew.-Teilen eines Fettsäureesters, hergestellt durch Veresterung von 15,4 Mol Montansäure, 292,5 Mol Tallölfettsäure und 102,6 Mol Triisopropanolamin,
3,12 Gew.-Teilen einer Lösung, bestehend aus 50 Gew.-Teilen eines Polyoxypropylen-triamins ($^R$Jeffamin T 403 der Firma Texaco) und 50 Gew.-Teilen Zinkstearat, hergestellt durch Erwärmen der Komponenten auf 80-100 °C,
0,072 Gew.-Teilen Natriumstearat,
0,072 Gew.-Teilen Calciumstearat und
0,036 Gew.-Teilen Zinkoxalat und
0,96 Gew.-Teilen Stearinsäure

Komponente II analog Beispiel 1

Die Herstellung des Formteils wurde analog den Angaben des Beispiels 1 durchgeführt.

Die Versuchsserie wurde abgebrochen, nachdem 40 Formkörper ohne jegliche Verklebung oder Verformung entformt werden konnten.

An dem erhaltenen Formteil wurden folgende mechanische Eigenschaften gemessen:

| | |
|---|---|
| Dichte nach DIN 53420 [$g/cm^3$] : | 1,12 |
| Shore D Härte nach DIN 53 505 : | 53 |
| Zugfestigkeit nach DIN 53 504 [$N/mm^2$] : | 25 |
| Dehnung nach DIN 53 504 [%] : | 320 |
| Weiterreißfestigkeit nach DIN 53 507 [N/mm] : | 25 |

Beispiel 7

Man verfuhr analog den Angaben von Beispiel 6, verwendete jedoch anstelle von 0,96 Gew.-Teilen Stearinsäure in der Komponente I 0,309 Gew.-Teile Benzoesäureanhydrid.

Die Versuchsserie wurde abgebrochen, nachdem 40 Formkörper ohne jegliche Verklebung mit dem Formwerkzeug oder Verformung entformt werden konnten.

An dem erhaltenen Formteil wurden folgende mechanische Eigenschaften gemessen:

| | |
|---|---|
| Dichte nach DIN 53 420 [$g/cm^3$] : | 1,13 |
| Shore D Härte nach DIN 53 505 : | 55 |
| Zugfestigkeit nach DIN 53 504 [$N/mm^2$] : | 27,3 |
| Dehnung nach DIN 53 504 [%] : | 318 |
| Weiterreißfestigkeit nach DIN 53 507 [N/mm] : | 31,0 |

Beispiel 8

Herstellung des inneren Formtrennmittels
421,35 Gew.-Teile Tridecylamin,
421,35 Gew.-Teile Zinkstearat,
28,09 Gew.-Teile Natriumstearat,
28,09 Gew.-Teile Calciumstearat und
56,18 Gew.-Teile Benzoesäureanhydrid
wurden in einem Zweiliter-3-Halskolben unter Rühren bei 60 °C in 1,5 Stunden gelöst. Nach dem Abkühlen auf 30 °C entstand eine gelbbraune, lagerstabile Suspension.

Beispiel 9

Herstellung des inneren Formtrennmittels
421,35 Gew.-Teile eines Amingemisches bestehend aus
28,2 Gew.-% 1-(2-Aminoethyl)-piperazin
12,3 Gew.-% 1-(2-Hydroxyethyl)-piperazin,
54,8 Gew.-% N-2-Aminoethylethanolamin
3,6 Gew.-% Diethylentriamin und
1,1 Gew.-% N,N'-Bis-(3-aminopropyl)-ethylendiamin
421,35 Gew.-Teile Zinkstearat,
28,09 Gew.-Teile Natriumstearat,
28,09 Gew.-Teile Calciumstearat,
44,94 Gew.-Teile Zinkoxalat und
56,18 Gew.-Teile Benzoesäureanhydrid

wurden analog den Angaben von Beispiel 8 unter Rühren bei 6O° C gelöst. Es entstand eine braune, trübe Lösung, die bei 6O° C 6 Wochen lagerstabil war.

Beispiel 10

Herstellung des inneren Formtrennmittels.
459,41 Gern.-Teile eines Amingemisches, bestehend aus
48,89 Gew.-% N-2-Aminoethyl-ethanolamin,
11,13 Gew.-% 1-(2-Hydroxiethyl)-piperazin,
20,04 Gew.-% 1-(2-Aminoethyl)-piperazin,
5,01 Gew.-% Dipropylentriamin und
14,93 Gew.-% n-Butylamin,
wurden in einem 2 l-Dreihalskolben, ausgestattet mit einem Rührer und Rückflußkühler, bei Raumtemperatur portionsweise mit 278,78 Gew.-Teilen Ölsäure versetzt. Anschließend wurde die Mischung 1 Stunde bei 100° C gerührt. Nach Abkühlen auf Raumtemperatur wurden der Mischung unter Rühren
723,97 Gew.-Teile Zinkstearat,
26,03 Gern.-Teile Natriumstearat und
26,03 Gern.-Teile Calciumstearat einverleibt.
Die Mischung wurde bis zur Bildung einer klaren Lösung bei 100° C ungefähr 1,5 Stunden gerührt.

Beispiel 11

Herstellung des inneren Formtrennmittels.

Zu 459,19 Gew.-Teilen 1-(2-Hydroxiethyl)-piperazin wurden in einem 2 1-Dreihalskolben unter Rühren bei Raumtemperatur 264,78 Gew.-Teile Ölsäure hinzugefügt und die Mischung danach 1 Stunde bei 100° C gerührt. Die Mischung ließ man anschließend auf 60° C abkühlen und fügte portionsweise unter Rühren
723,97 Gew.-Teile Zinkstearat und
26,03 Gern.-Teile Calciumstearat
hinzu Nach beendeter Zugabe wurde die Mischung noch ungefähr 2 Stunden bei 120° C gerührt bis eine völlig klare Lösung entstanden war.

Beispiel 12

Komponente I: Mischung aus
74,78 Gern.-Teilen eines Polyoxypropylen(80 Gern. 96)-polyoxyethylen-(20 Gern. %)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-addukt,
20,0 Gew.-Teilen 1-Methyl-3,5-diethyl-2,4-diaminobenzol,
1,0 Gew.-Teilen 1,4-Diazabicyclo-(2,2,2)-octan(33 gew.-%ige Lösung in Dipropylenglykol)
0,22 Gew.-Teilen Dibutylzinndilaurat, und
4,0 Gew.-Teilen des inneren Formtrennmittels nach Beispiel 10.

Komponente II:

60 Gew.-Teile einer Mischung aus mit Polyoxypropylen-glykol modifiziertem 4,4-Diphenylmethandiisocyanat mit einem NCO-Gehalt von 23 Gew.-%.

Die Herstellung der Formteile erfolgte analog den Angaben von Beispiel 1. Die Versuchsserie wurde abgebrochen, nachdem 100 Formkörper ohne jegliche Verformung oder Verklebung problemlos entformt wurden.

An dem enthaltenen Formkörper wurden folgende mechanische Eigenschaften gemessen:

| | |
|---|---|
| Dichte nach DIN 53 420 [g/cm$^3$]: | 1,1 |
| Shore D Härte nach DIN 53 505 : | 52 |
| Zugfestigkeit nach DIN 53 504 [N/mm$^2$]: | 25,5 |
| Dehnung nach DIN 53 504 [%] : | 330 |
| Weiterreißfestigkeit nach DIN 53 507 [N/mm]: | 29,0 |

Beispiel 13

Man verfuhr analog den Angaben des Beispiels 12, verwendete jedoch anstelle des inneren Trennmittels nach Beispiel 10 4 Gew.-Teile des in Beispiel 11 beschriebenen Formtrennmittels.

Die Versuchsserie wurde abgebrochen, nachdem 40 Formkörper ohne jegliche Verklebung oder Verformung entformt wurden.

An dem erhaltenen Formkörper wurden folgende mechanische Eigenschaften gemessen:

| | |
|---|---|
| Dichte nach DIN 53 420 [g/cm$^3$] : | 1,1 |
| Shore D Härte nach DIN 53 505 : | 52 |
| Zugfestigkeit nach DIN 53 504 [N/mm$^2$] : | 26 |
| Dehnung nach DIN 53 504 [%] : | 320 |
| Weiterreißfestigkeit nach DIN 53 507 [N/mm]: | 29,0 |

**Patentansprüche**

1. Verfahren zur Herstellung von zellhaltigen oder kompakten Polyurethan-Polyharnstoff-Formkörpern mit verbesserten Entformungseigenschaften durch Umsetzung von

   a) organischen Polyisocyanaten,
   b) höhermolekularen Verbindungen mit einem Molekulargewicht von 1000 bis 8000 und mindestens zwei reaktiven Wasserstoffatomen,
   c) aromatischen primären Diaminen und gegebenenfalls
   d) weiteren Kettenverlängerungsmitteln und/oder Vernetzern in Gegenwart von
   e) inneren Formtrennmitteln,
   f) Katalysatoren und gegebenenfalls
   g) Treibmitteln,
   h) Hilfsmitteln und/oder Zusatzstoffen

   als one shot-System nach der Reaktionsspritzgußtechnik in einem geschlossenen Formwerkzeug, dadurch gekennzeichnet, daß man als inneres Formtrennmittel
   A) 0,1 bis 10 Gew.-%, bezogen auf das Gesamtgewicht der Komponenten (b) bis (d), einer Mischung aus
   i) 5 bis 80 Gew.-Teilen mindestens eines organischen Amins (A, i) ausgewählt aus der Gruppe der primären aliphatischen und/oder cycloaliphatischen Monoamine mit 3 bis 20 Kohlenstoffatomen,
   der linearen, verzweigten, cyclischen und/oder heterocyclischen Alkanolamine mit 2 bis 12 Kohlenstoffatomen,
   der aliphatischen oder cycloaliphatischen primären Diamine mit 2 bis 20 Kohlenstoffatomen,
   der aliphatischen oder cycloaliphatischen primären Mono- und/oder Polyamine, die zusätzlich sekundäre und/oder tertiäre Aminogruppen und/oder heterocyclische Reste und/oder Hydroxylgruppen und/oder Ethergruppen gebunden enthalten und
   der Polyoxyalkylen-polyamine mit Molekulargewichten von 204 bis 5000 und/oder eines cyclischen Lactams,

ii) 20 bis 95 Gew.-Teilen mindestens eines Metallsalzes der Stearin- und/oder Isostearinsäure und
iii) 0 bis 5 Gew.-Teilen eines Metallsalzes einer organischen Mono- und/oder Dicarbonsäure und
B) 0,01 bis 2 Gew.-%, bezogen auf das Gesamtgewicht der Komponenten (b) bis (d), mindestens einer organischen Monound/oder Dicarbonsäure oder deren Anhydride verwendet.

**2.** Verfahren nach Anspruch 1, dadurch gekennzeichnet, daß man die organischen Polyisocyanate (a), höhermolekularen Verbindungen mit einem Molekulargewicht von 1000 bis 8000 und mindestens zwei reaktiven Wasserstoffatomen (b), aromatischen primären Diamine (c) und gegebenenfalls Kettenverlängerungsmittel und/oder Vernetzer in solchen Mengen zur Umsetzung bringt, daß das Äquivalenz-Verhältnis von NCO-Gruppen der Polyisocyanate (a) zur Summe der reaktiven Wasserstoffatome der Komponenten (b), (c) und gegebenenfalls (d) 1:0,85 bis 1,25 beträgt.

**3.** Inneres Formtrennmittel zur Herstellung von Formkörpern nach dem Polyisocyanat-Polyadditionsverfahren bestehend aus
A) einer Mischung aus
i) 5 bis 80 Gew.-Teilen mindestens eines organischen Amins (A, i) ausgewählt aus der Gruppe der primären aliphatischen und/oder cycloaliphatischen Monoamine mit 3 bis 20 Kohlenstoffatomen,
der linearen, verzweigten, cyclischen und/oder heterocyclischen Alkanolamine mit 2 bis 12 Kohlenstoffatomen,
der aliphatischen oder cycloaliphatischan primären Diamine mit 2 bis 20 Kohlenstoffatomen,
der aliphatischen oder cycloaliphatischen primären Mono- und/oder Polyamine, die zusätzlich sekundäre und/oder tertiäre Aminogruppen und/oder heterocyclische Reste und/oder Hydroxylgruppen und/oder Ethergruppen gebunden enthalten und
der Polyoxyalkylen-polyamine mit Molekulargewichten von 204 bis 5000, und/oder eines cyclischen Lactams,
ii) 20 bis 95 Gew.-Teilen mindestens eines Metallsalzes der Stearinund/oder Isostearinsäure und
iii) 0 bis 5 Gew.-Teilen eines Metallsalzes einer organischen Monound/oder Dicarbonsäure und
B) 0,1 bis 200 Gew.-%, bezogen auf das Gesamtgewicht der Mischung A), mindestens einer organischen Mono- und/oder Dicarbonsäure oder deren Anhydride.

**4.** Inneres Formtrennmittel nach Anspruch 3, dadurch gekennzeichnet, daß als Metallsalze (A,ii) und (A,iii) Zink-, Erdalkali- und/oder Alkalimetallsalze verwendet werden.

**5.** Inneres Formtrennmittel nach Anspruch 3, dadurch gekennzeichnet, daß als Metallsalze (A, ii) und (A, iii) Zink-, Calcium-, Magnesium-, Kalium- und Natriumsalze verwendet werden.

**6.** Inneres Formtrennmittel nach Anspruch 3, dadurch gekennzeichnet, daß als Metallsalze der Stearinsäure und/oder Isostearinsäure (A,ii) Zinkstearat, Zinkisostearat, Calciumstearat oder Natriumstearat und Mischungen aus mindestens zwei der genannten Stearate verwendet werden.

**7.** Inneres Formtennmittel nach Anspruch 3, dadurch gekennzeichnet, daß als Metallsalze der Stearinsäure (A, ii) eine Mischung aus Zink-, Calcium- und Natriumstearat verwendet wird.

**8.** Inneres Formtrennmittel nach Anspruch 3, dadurch gekennzeichnet, daß die organischen Mono- und/oder Dicarbonsäuren zur Herstellung der Metallsalze (A, iii) einen pKs-Wert von 1,1 bis 6,8 besitzen.

**9.** Inneres Formtrennmittel nach Anspruch 3, dadurch gekennzeichnet, daß als Mono- und/oder Dicarbonsäuren oder deren Anhydride (B) verwendet werden
aliphatische Monocarbonsäuren mit 1 bis 20 Kohlenstoffatomen,
aliphatische Dicarbonsäuren mit 2 bis 36 Kohlenstoffatomen,
aromatische Mono- und Dicarbonsäuren mit 7 bis 12 Kohlenstoffatomen und deren Anhydride.

**10.** Verwendung der inneren Formtrennmittel nach Anspruch 3 zur Herstellung von kompakten oder zelligen Formkörpern nach dem Polyisocyanat-polyadditionsverfahren, vorzugsweise nach der Reaktionsspritzguß-(RIM)-technik.

## Claims

1. A process for the production of cellular or compact polyurethane-polyurea moldings having improved demolding properties, by reacting
   a) an organic polyisocyanate,
   b) a relatively high-molecular-weight compound having a molecular weight of from 1000 to 8000 and containing at least two reactive hydrogen atoms,
   c) an aromatic primary diamine and, if desired,
   d) a further chain extender and/or crosslinking agent, in the presence of
   e) an internal mold release agent,
   f) a catalyst and, if desired,
   g) a blowing agent,
   h) assistants and/or additives,

   as a one-shot system by reaction injection molding in a closed mold, which comprises using as the internal mold release agent
   A) from 0.1 to 10 % by weight, based on the total weight of components b) to d), of a mixture of
      i) from 5 to 80 parts by weight of at least one organic amine (A, i) selected from the group comprising primary aliphatic and/or cycloaliphatic monoamines having from 3 to 20 carbon atoms, linear, branched, cyclic and/or heterocyclic alkanolamines having from 2 to 12 carbon atoms, aliphatic or cycloaliphatic primary diamines having from 2 to 20 carbon atoms, aliphatic or cycloaliphatic primary monoamines and/or polyamines which additionally contain bonded secondary and/or tertiary amino groups and/or heterocyclic radicals and/or hydroxyl groups and/or ether groups, and polyoxyalkylene-polyamines having molecular weights of from 400 to 5000 and/or of a cyclic lactam,
      ii) from 20 to 95 parts by weight of at least one metal salt of stearic acid and/or isostearic acid and
      iii) from 0 to 5 parts by weight of a metal salt of an organic monocarboxylic acid and/or dicarboxylic acid, and

   B) from 0.01 to 2 % by weight, based on the total weight of components (b) to (d), of at least one organic monocarboxylic acid and/or dicarboxylic acid, or an anhydride thereof.

2. A process as claimed in claim 1, wherein the organic polyisocyanate (a), the relatively high-molecular-weight compound having a molecular weight of from 1000 to 8000 and containing at least two reactive hydrogen atoms (b), the aromatic primary diamine (c) and, if used, the chain extender and/or crosslinking agent (d) are reacted in such amounts that the equivalence ratio between NCO groups of the polyisocyanate (a) and the total number of reactive hydrogen atoms of components (b), (c) and, if used, (d) is from 1:0.85 to 1.25.

3. An internal mold release agent for the production of moldings by the polyisocyanate polyaddition process, comprising
   A) a mixture of
      i) from 5 to 80 parts by weight of at least one organic amine (A, i) selected from the group comprising primary aliphatic and/or cycloaliphatic monoamines having from 3 to 20 carbon atoms, linear, branched, cyclic and/or heterocyclic alkanolamines having from 2 to 12 carbon atoms, aliphatic or cycloaliphatic primary diamines having from 2 to 20 carbon atoms, aliphatic or cycloaliphatic primary monoamines and/or polyamines which additionally contain bonded secondary and/or tertiary amino groups and/or heterocyclic radicals and/or hydroxyl groups and/or ether groups, and polyoxyalkylene-polyamines having molecular weights of from 204 to 5000, and/or of a cyclic lactam,
      ii) from 20 to 95 parts by weight of at least one metal salt of stearic acid and/or isostearic acid and
      iii) from 0 to 5 parts by weight of a metal salt of an organic monocarboxylic acid and/or dicarboxylic acid, and

   B) from 0.1 to 200 % by weight, based on the total weight of the mixture A), of at least one organic monocarboxylic acid and/or dicarboxylic acid, or an anhydride thereof.

4. An internal mold release agent as claimed in claim 3, wherein the metal salts (A, ii) and (A, iii) are zinc salts, alkaline earth metal salts and/or alkali metal salts.

5. An internal mold release agent as claimed in claim 3, wherein the metal salts (A, ii) and (A, iii) are zinc salts, calcium salts, magnesium salts, potassium salts or sodium salts.

6. An internal mold release agent as claimed in claim 3, wherein the metal salt of stearic acid and/or isostearic acid (A, ii) is zinc stearate, zinc isostearate, calcium stearate or sodium stearate or a mixture of at least two of said stearates.

7. An internal mold release agent as claimed in claim 3, wherein the metal salt of stearic acid (A, ii) is a mixture of zinc stearate, calcium stearate and sodium stearate.

8. An internal mold release agent as claimed in claim 3, wherein the organic monocarboxylic acid and/or dicarboxylic acid for the preparation of the metal salt (A, iii) has a $pK_a$ value of from 1.1 to 6.8.

9. An internal mold release agent as claimed in claim 3, wherein the monocarborylic acid and/or dicarboxylic acid (B) or the anhydride thereof is
an aliphatic monocarboxylic acid having from 1 to 20 carbon atoms,
an aliphatic dicarboxylic acid having from 2 to 36 carbon atoms,
an aromatic monocarboxylic acid or dicarboxylic acid having from 7 to 12 carbon atoms,
or an anhydride thereof.

10. The use of an internal mold release agent as claimed in claim 3 for the production of compact or cellular moldings by the polyisocyanate polyaddition process, preferably by reaction injection molding (RIM).

**Revendications**

1. Procédé pour la fabrication de corps moulés alvéolaires ou compacts en polyuréthanne-polyurées ayant des propriétés améliorées de démoulage par réaction de :

a) des polyisocyanates organiques,
b) des composés à haut poids moléculaire, de poids moléculaire 1000 à 8000, portant au moins deux atomes d'hydrogène réactifs,
c) des diamines aromatiques primaires et le cas échéant
d) d'autres agents d'allongement des chaînes et/ou agents réticulants, en présence de
e) des agents de démoulage internes,
f) des catalyseurs et le cas échéant
g) des agents gonflants,
h) des produits auxiliaires et/ou additifs,

en système "one-shot", par la technique de moulage réactif par injection dans un outil de moulage fermé, caractérisé en ce que l'on utilise en tant qu'agent de démoulage interne

A) 0,1 à 10 % en poids, par rapport au poids total des composants b) à d),
d'un mélange de
i) 5 à 80 parties en poids d'au moins une amine organique (A, i) choisie dans le groupe des monoamines aliphatiques et/ou cycloaliphatiques primaires en C 3-C 20,
des alcanolamines linéaires, ramifiées, cycliques et/ou hétérocycliques en C 2-C 12,
des diamines aliphatiques ou cycloaliphatiques primaires en C 2-C 20, des mono- et/ou polyamines aliphatiques ou cycloaliphatiques primaires contenant en outre des groupes amino secondaires et/ou tertiaires et/ou des radicaux hétérocycliques et/ou des groupes hydroxy et/ou des groupes éther, et
des polyoxyalkylène-polyamines de poids moléculaire 400 à 5000, et/ou d'un lactame cyclique,
ii) 20 à 95 parties en poids d'au moins un sel métallique de l'acide stéarique et/ou isostéarique, et
iii) 0 à 5 parties en poids d'un sel métallique d'un acide organique mono- et/ou di-carboxylique,

et
B) 0,01 à 2 % en poids, par rapport au poids total des composants b) à d), d'au moins un acide organique mono- et/ou di-carboxylique ou son anhydride.

**2.** Procédé selon la revendication 1, caractérisé en ce que les polyisocyanates organiques a), les composés à haut poids moléculaire, de poids moléculaire 1000 à 8000, contenant au moins 2 atomes d'hydrogène réactifs b), les diamines aromatiques primaires c) et le cas échéant les agents d'allongement des chaînes et/ou agents réticulants d) sont mis à réagir en quantités telles que le rapport des équivalents de groupes NCO des polyisocyanates a) à la somme des atomes d'hydrogène réactifs des composants b), c) et éventuellement d) aille de 1:0,85 à 1,25.

**3.** Agent de démoulage interne pour la fabrication de corps moulés par le procédé de polyaddition des polyisocyanates, consistant en :

A) un mélange de :
i) 5 à 80 parties en poids d'au moins une amine organique (A, i) choisie dans le groupe des monoamines aliphatiques et/ou cycloaliphatiques primaires en C 3-C 20,
des alcanolamines linéaires, ramifiées, cycliques et/ou hétérocycliques en C 2-C 12,
des diamines aliphatiques ou cycloaliphatiques primaires en C 2-C 20,
des mono- et/ou poly-amines aliphatiques ou cycloaliphatiques primaires contenant en outre des groupes amino secondaires et/ou tertiaires et/ou des radicaux hétérocycliques et/ou des groupes hydroxy et/ou des groupes éther, et
des polyoxyalkylène-polyamines de poids moléculaire 204 à 5000, et/ou d'un lactame cyclique,
ii) 20 à 95 parties en poids d'au moins un sel métallique de l'acide stéarique et/ou isostéarique, et
iii) 0 à 5 parties en poids d'un sel métallique d'un acide organique mono- et/ou di-carboxylique, et
B) 0,1 à 200 % en poids, par rapport au poids total du mélange A), d'au moins un acide organique mono- et/ou di-carboxylique ou son anhydride.

**4.** Agent de démoulage interne selon la revendication 3, caractérisé en ce que les sels métalliques (A, ii) et (A, iii) sont des sels de zinc, de métaux alcalinoterreux et/ou de métaux alcalins.

**5.** Agent de démoulage interne selon la revendication 3, caractérisé en ce que les sels métalliques (A, ii) et (A, iii) sont des sels de zinc, de calcium, de magnésium, de potassium et de sodium.

**6.** Agent de démoulage interne selon la revendication 3, caractérisé en ce que les sels métalliques de l'acide stéarique et/ou isostéarique (A, ii) sont le stéarate de zinc, l'isostéarate de zinc, le stéarate de calcium ou le stéarate de sodium ou des mélanges d'au moins deux des stéarates en question.

**7.** Agent de démoulage interne selon la revendication 3, caractérisé en ce que le sel métallique d'acide stéarique (A, ii) est un mélange de stéarate de zinc, de stéarate de calcium et de stéarate de sodium.

**8.** Agent de démoulage interne selon la revendication 3, caractérisé en ce que les acides organiques mono- et/ou di-carboxyliques utilisés pour la préparation des sels métalliques (A, iii) ont une valeur de pKa de 1,1 à 6,8.

**9.** Agent de démoulage interne selon la revendication 3, caractérisé en ce que les acides mono- et/ou dicarboxyliques ou leurs anhydrides B) sont
des acides aliphatiques monocarboxyliques en C 1-C 20,
des acides dicarboxyliques aliphatiques en C 2-C 36,
des acides mono- et di-carboxyliques aromatiques en c 7-C 12 et leurs anhydrides.

**10.** Utilisation des agents de démoulage interne selon la revendication 3 pour la fabrication de corps moulés compacts ou alvéolaires par le procédé de polyaddition des polyisocyanates, de préférence par la technique de moulage réactif par injection (RIM).